Europäisches Patentamt

European Patent Office

Office européen des brevets

(11) Publication number: **0 295 042 A1**

# (12) EUROPEAN PATENT APPLICATION

(21) Application number: 88305165.8

(22) Date of filing: 07.06.88

(51) Int. Cl.⁴: **A44B 11/25**

(30) Priority: 09.06.87 GB 8713441

(43) Date of publication of application:
**14.12.88 Bulletin 88/50**

(84) Designated Contracting States:
**DE FR GB IT SE**

(71) Applicant: **AIRCRAFT MATERIALS LIMITED**
**Old's Approach Tolpits Lane**
**Watford Hertfordshire WD1 8QT(GB)**

(72) Inventor: **Burnside, Martin Bell**
**8 Oakhill Avenue**
**Pinner Middlesex HA5 3DN(GB)**

(74) Representative: **Meeks, Frank Burton et al**
**BREWER & SON Quality House Quality Court**
**Chancery Lane**
**London WC2A 1HT(GB)**

(54) **Safety fastener.**

(57) A safety fastener for harness lugs includes a strong plate (24) tiltably mounted in a hollow body (2). A cover disc (14) is rotatably mounted on the body (2) between a locking position, a receiving position and a release position. The strong plate (24) is biased by springs (28) into a lug retaining disposition. Inner projections (30) on the strong plate (24) engage cams (12) on the centre spindle (8).

The disc (14) is held in the locking position by a push button (16). When in this locking position projections (38) on the spindle (8) prevent tilting or axial movement of the strong plate (24).

To engage harness lugs (6), the push button (16) is pressed inwardly, and the disc (14) is rotated against the bias of leaf springs (34). This rotation positions the projections (30) so as to be clear of the projections (38) thereby enabling the strong plate (24) to be tilted to receive the lugs. When the disc (14) is released the leaf springs return the disc (14) to the starting position where the lock engages, and in which the projections (38) prevent the strong plate (24) from rising so that the mechanism is inertia proof.

To release the lugs, the push button (16) is pressed and the operating disc is turned until the projections (30) ride up on the cams (12) thereby raising the strong plate (24) sufficiently to release the lugs.

Fig. I.

## SAFETY FASTENER

The present invention relates to a safety fastener, and is particularly concerned with a safety fastener adapted to engage and to be released from at least one lug.

Although the invention is not restricted in its application, it is particularly suitable as a safety fastener for at least one lug of a harness such as a harness for an aircraft seat, or a combined restraint and parachute harness.

According to the present invention there is provided a safety fastener for a lug comprising a hollow body, a securing member tiltably mounted in the body for movement between a lug retaining disposition and a lug receiving disposition, and biased into the lug retaining disposition, means to retain the securing member in the lug retaining disposition, a control member mounted on the body for movement between a receiving position in which the securing member can tilt to a lug receiving disposition, and a release position in which the securing member is located in a lug releasing disposition, and locking means to retain the control member in a locking position.

In a preferred arrangement, the control member is rotatably mounted on the body, and a camming surface is movable by the control member to move said securing member between said lug retaining and releasing dispositions.

Preferably obstructing means, such as radially extending blocking members, are movable by the control member to retain the securing member in the lug retaining disposition when the control member is in the locking position.

An embodiment of the invention will now be described by way of example with reference to the accompanying drawings in which:-

Figure 1 is a sectional elevation of one fastener device of the invention,

Figure 2 is a sectional elevation of the device of Figure 1 at an angle of 45° to that of Figure 1,

Figure 3 is a plan view from below of the device of Figures 1 and 2,

Figure 4 is a plan view from above of the device of Figures 1 to 3 with the harness lugs inserted, and

Figure 5 is a sectional elevation of a modified fastener device of the invention.

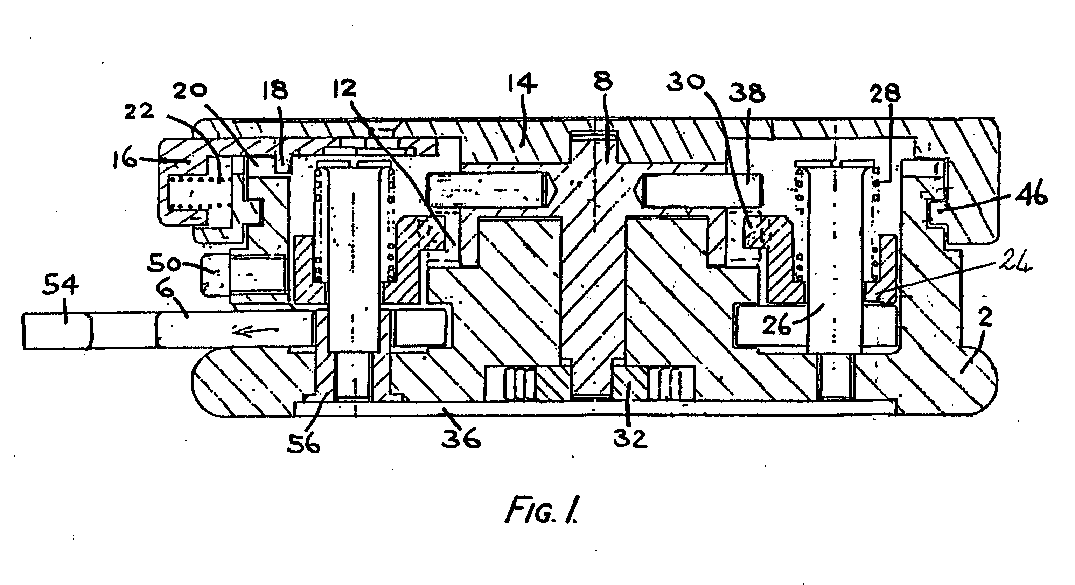

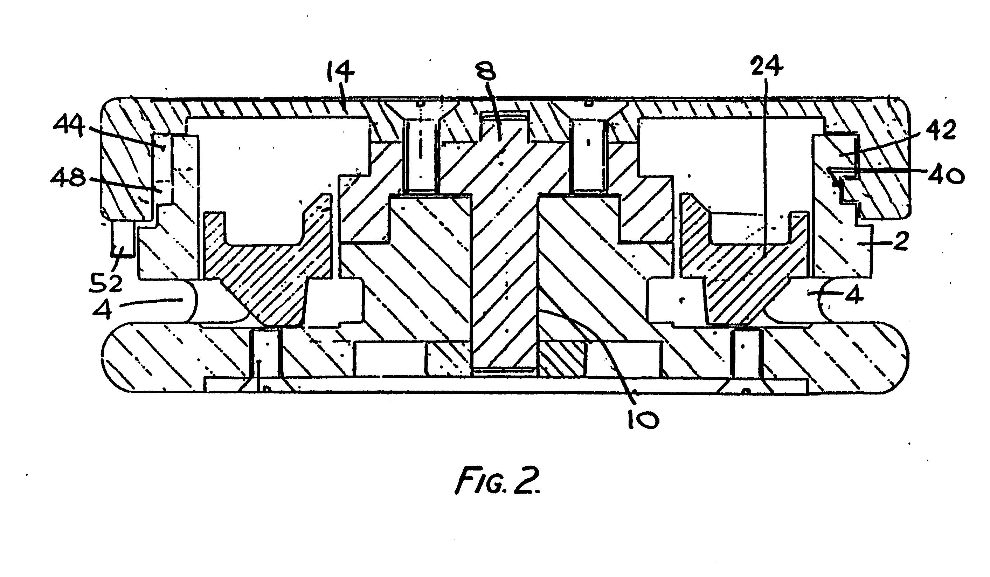

Referring to Figures 1 and 2, the device includes a cup-shaped body 2 of circular cross-section which is provided with four slots 4 extending radially therein to receive the lugs 6 of a parachute harness, not shown. A spindle 8 is rotatably mounted in a bore 10 which extends along the central axis of the body 2. The spindle 8 includes four cams 12 which are located radially outwardly from the rotational axis of the spindle 8.

An operating cover disc 14 is mounted on the spindle 8 and is rotatable in either direction. A spring-loaded push button 16 is mounted on the disc 14, and has a projection 18 which engages a slot 20 in the rim of the body 2 when the button 16 is in the rest position so as to prevent rotation of the disc 14 relative to the body 2. The push button 16 is retained in the rest position by a compression spring 22 thereby ensuring that the projection 18 engages the slot 20. Depression of the push button 16 against the influence of the spring 22 locates the projection 18 inside the rim of the body 2 to allow rotation of the operating disc 14 in either direction. In another embodiment there may be two push buttons opposite one another.

A spigoted strong plate 24, in the form of a ring, is located in the body 2 by headed columns 26 which are screwed to the body 2 and which pass through holes in the plate 24. Clearances are located between the columns 26 and the holes in the strong plate 24, and between the outside and inside circumferences of the strong plate 24. These clearances allow the strong plate 24 to tilt sufficiently to admit the entry of each harness lug. The strong plate 24 is biased into the engagement position by means of compression springs 28 mounted on the columns 26 and extending between the headed ends of the columns and the strong plate 24.

Symmetrically disposed radially inner projections 30 on the strong plate 24 engage the cams 12 of the centre spindle 8 so that when the operating disc 14 and the spindle 8 are rotated through a predetermined number of degrees the cams 12 on the centre spindle 8 engage and raise the strong plate 24 axially against the influence of the compression springs 28.

A square cam 32 is keyed to the lower end of the cam spindle 8 and is located in a recess in the base of the body 2. This cam 32 is biased by an arrangement of leaf springs 34 so that the operating disc 14 is biased to the locked position at which the push button 16 is engaged in the slot 20. The square cam 32 and the springs 34 are retained in position by a cover plate 36 on the base of the body 2.

Four equally spaced projections 38 on the cam spindle 8 extend radially outwardly between the cams 12 inside the operating disc 14. These projections 38 are positioned so that when the operating disc 14 is biased to, and locked by the push button lock 16, in the locked position, tilting or axial movement of the strong plate 24 is prevented because the projections 30 would abut the projections 38 on the cam spindle 8. This causes the unit to be inertia proof.

The harness lugs 6 can be engaged only after the button 16 has been pressed and the operating disc 14 rotated sufficiently against the spring bias of the leaf springs 34 to move the projections 38 out of a blocking position so that the strong plate 24 can tilt.

Similarly, the projections 38 on the cam spindle 8 are moved out of the blocking position when the rotation of the operating disc 14 to its full extent causes the cams 12 to raise the strong plate 24 axially to permit the harness lugs to be disengaged. The cams 12 raise the projections 30 of the strong plate 24 simultaneously.

The outside of the body 2 is provided with an annular groove 40, and a rim 42 which is removed for a region of approximately 90° at two positions 44 diametrically opposite to one another. The operating disc 14 has a corresponding inwardly projecting annular tongue 46 which is also removed for a region over approximately 90° at two diametrically opposite positions 48. This enables the body 2 and the operating disc 14 to be assembled so that they can be axially engaged and then turned through 90° so that the tongue 46 is in full engagement with the groove 40. A headed screw 50 fitted to the body 2 abuts with one of two diametrically opposite projections 52 on the operating disc 14 to prevent the disc from rotating more than about 55° in either direction. This rotation causes the projections 30 to ride up along the cams 12 to raise the strong plate 24. Because of the remaining 35° of engagement of the tongue 46 in the groove 40 of the body 2, the operating disc 14 cannot be removed axially from the body. A negative "G" lug 54 is engaged by a shear bush 56.

To engage the lugs, the push button 16 is pressed inwardly, and the operating disc 14 is turned through approximately 20° in either direction against the bias of the leaf springs 34. This rotation of the operating disc 14 positions the projections 30 of the strong plate 24 so as to be clear of the projections 38 to enable the strong plate 24 to be tilted. The operating disc 14 is held in this position and one or more of the harness lugs is inserted into the appropriate slot 4 to tilt the strong plate 24 and then to be engaged by the strong plate 24 to be retained thereby. When the operating disc 14 is released, the bias of the leaf springs returns the disc 14 to the starting position, and the push button lock 16 engages automatically. In this position the projections 38 prevent the strong plate 24 from rising thereby retaining the lugs in position. If any lug is inserted but not pushed fully in, it will not be properly engaged and the operating disc 14 will not return to the starting position because the projections 30 will foul the projections 38. The attitude of the marking on the face of the operating disc 14 will indicate any such incorrect engagement.

To release the lugs, the push button 16 is pressed and the operating disc 14 is turned in either direction against the spring bias of the leaf springs 34 until the resistance to further rotation is felt. This resistance is caused by the cams 12 meeting the projections 30 on the strong plate 24. On applying increased torque, the operating disc 14 can be rotated for approximately a further 35° to the unlocked position thereby simultaneously releasing all the lugs. The lugs are released simultaneously because the projections 30 and the strong plate 24 ride axially up the cams 12 against the bias of the springs 28 on the columns 26.

The operating disc 14 will remain in the unlocked attitude in which the lugs cannot be re-engaged because the projections 30 are on the flat top of the cams 12. Each cam 12 has a flat top and inclined forward and rearward faces. Further rotation of the operating disc 14 is prevented because the stop screw 50 engages the projections 52 on the disc 14. The resistance to rotation of the disc 14 increases at 28° of turn until the lugs are released at 36° of turn when the projections 30 ride up the upwardly inclined faces of the cams 12 to reach the top of these cam faces.

To reset the fastener device, the operating disc 14 is turned towards the starting position. After approximately 15° of turn, the disc 14 continues to return under the action of the leaf spring bias until the disc lock 16 engages automatically. During this rotation the projections 30 descend from the tops of the cam faces 12 under the influence of the springs 28.

Servicing of the fastener device is carried out by removing one small socket head screw from the bottom centre line of the body 2. After the button 16 has been pressed, this will allow the operating disc 14 to be rotated a full 90° in either direction against the bias. After 55° of turn the disc 14 will be found to be biased to the 90° position where it can be separated axially from the body 2. This will allow the mechanism to be examined and cleaned if necessary, and further dismantling will not normally be required.

Reassembly of the device is simply a reversal of the dismantling procedure.

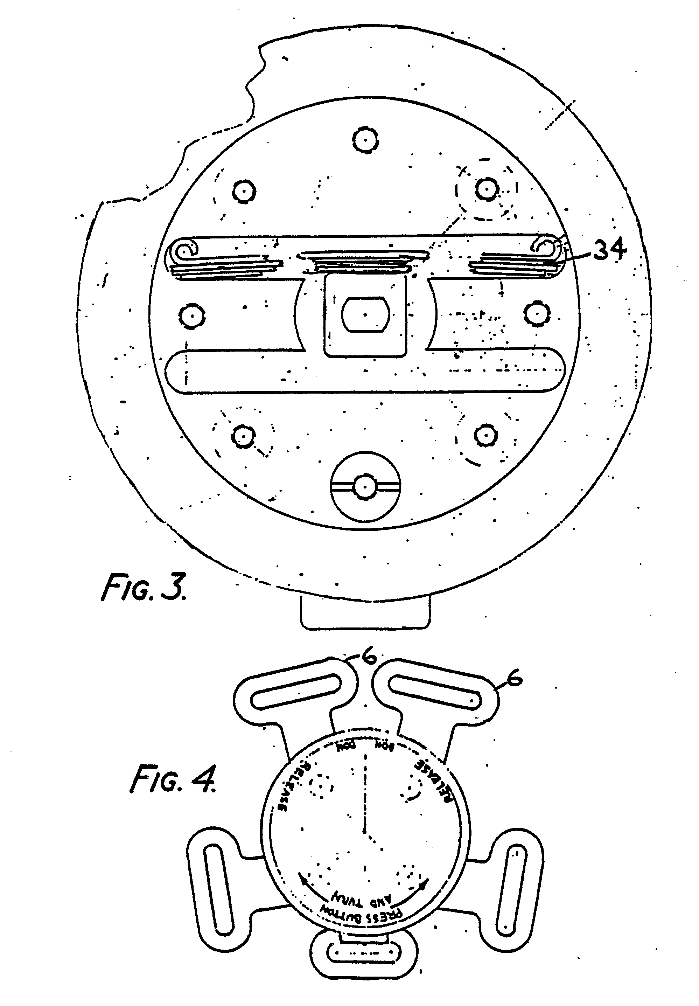

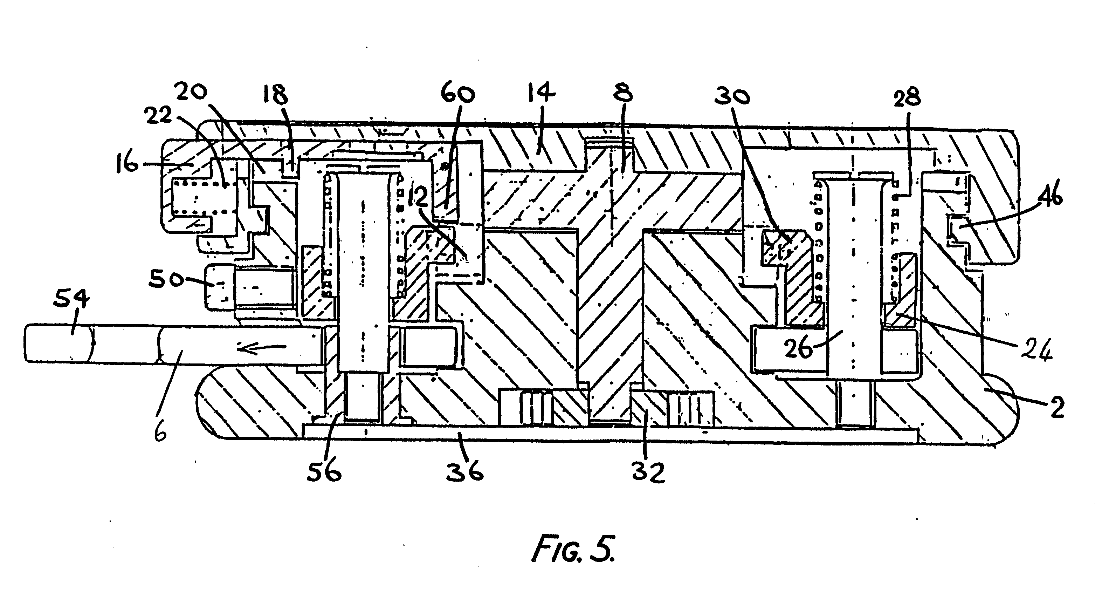

Referring to Figure 5, in a modified version of the fastener device of Figures 1 to 4, the projections 38 are removed. The push-button 16 is extended to provide an inverted L-shaped retaining member 60. A corresponding push-button and retaining member (not shown) are located diametrically opposite to the push-button 16 and retaining member 60. Appropriate modifications are made if and where necessary to accommodate this second push-button and retaining member.

The two retaining members 60 are positioned so that when the operating disc 14 is biased to, and locked by the two push-buttons 16, in the illustrated locked position, tilting or axial movement of the strong plate 24 is prevented by the retaining members 60.

To enable one or more harness lugs 6 to be engaged, both buttons 16 are pressed to move the retaining members 60 out of the locking position so that the strong plate 24 can tilt.

In this modified construction the lugs 6 can be engaged without having to rotate the operating disc 14.

## Claims

1. A safety fastener for a lug comprising a hollow body (2), characterised by a securing member (24) tiltably ounted in the body for movement between a lug retaining disposition and a lug receiving disposition, and biased into the lug retaining disposition, means (38,60) to retain the securing member (24) in the lug retaining disposition, a control member (14) mounted on the body for movement between a receiving position in which the securing member (24) can tilt to a lug receiving disposition, and a release position in which the securing member (24) is located in a lug releasing disposition, and locking means (16) to retain the control member (14) in a locking position.

2. A safety fastener as claimed in claim 1, in which the control member (14) is rotatably mounted on the body (2).

3. A safety fastener as claimed in claim 2 including a camming surface (12) movable by the control member (14) to move said securing member (24) between said lug retaining and releasing dispositions.

4. A safety fastener as claimed in claim 3 in which a part (30) of said securing member (24) engages said camming surface (12) on movement of the securing member between said lug retaining and releasing dispositions.

5. A safety fastener as claimed in claim 4 in which the camming surface (12) includes an upper surface to retain the securing member (24) in the lug releasing disposition.

6. A safety fastener as claimed in any one of claims 2 to 5 in which the retaining means (38) is movable by said control member (14) to retain the securing member (24) in the lug retaining disposition when the control member (14) is in a locking position.

7. A safety fastener as claimed in any one of claims 1 to 5 in which the retaining means (60) is operable by the locking means (16).

8. A safety fastener as claimed in claim 6 in which the retaining means (38) comprises radially extending blocking members.

9. A safety fastener as claimed in any preceding claim in which the locking means (16) comprises an operating member (18) on the control member (14) biased to engage the body (2); said operating member being movable to disengage the body (2).

10. A safety fastener as claimed in any preceding claim in which the control member (14) is axially located relative to the body (2) by a radially inwardly projecting tongue (46) on the control member engaging a groove (40) in the body.

11. A safety fastener as claimed in any preceding claim including spring means (34) to return the control member (14) to the locking position.

*FIG. 1.*

EP 0 295 042 A1

FIG. 2.

EP 0 295 042 A1

FIG. 3.

FIG. 4.

FIG. 5.

EP 0 295 042 A1

# EUROPEAN SEARCH REPORT

European Patent Office

Application Number

EP 88 30 5165

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 158 255 (ETUDES ET FABRICATIONS AERONAUTIQUES S.A.) * claim 3 * --- | 3 | A 44 B 11/25 |
| A | DE-A-3 047 664 (AUTOFLUG GMBH) * claim 1 * --- | 1 | |
| A | DE-U-8 415 024 (AUTOFLUG GMBH) * claim 2 * --- | 1 | |
| A | DE-U-8 505 181 (AUTOFLUG GMBH) * claim 1 * --- | 1 | |
| A | FR-A-2 337 521 (R. LOPEZ et al.) * claim 1 * ----- | 1-3 | |

TECHNICAL FIELDS SEARCHED (Int. Cl.4)

A 44 B 11/00

The present search report has been drawn up for all claims

| Place of search | Date of completion of the search | Examiner |
|---|---|---|
| BERLIN | 29-07-1988 | ZAPP E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)